# EUROPEAN PATENT SPECIFICATION

(11) **EP 1 843 589 B1**
(45) Date of publication and mention of the grant of the patent: **23.03.2011**
(21) Application number: 07014221.1
(22) Date of filing: 12.08.2004
(51) Int. Cl.: H04N 7/14, H04M 1/02, H04N 5/225

(54) **Camera lens assembly for portable wireless terminals**
Kameraobjektivanordnung für tragbare drahtlose Endgeräte
Ensemble de lentille d'appareil photographique pour terminaux portables sans fil

(30) Priority: 21.08.2003 KR 20030057963
(43) Date of publication of application: 10.10.2007
(62) Divisional of application: 04019213.0
(73) Proprietor: Samsung Electronics Co., Ltd., Suwon-si Gyeonggi-do 443-742 (KR)
(72) Inventor: Bae, Chul-Ho, Gyeonggi-do 443-742 (KR)
(74) Representative: Grünecker, Kinkeldey, Stockmair & Schwanhäusser Anwaltssozietät

(56) References cited:
- EP-A- 0 930 770
- EP-A- 1 413 820
- EP-A- 1 469 656
- US-A1- 2003 109 232

## Description

### 1. Field of the Invention

The present invention relates to a portable wireless terminal, and more particularly to a camera lens assembly for portable wireless terminals.

### 2. Description of the Related Art

Portable wireless terminals with various functions and shapes have been proposed as the information communication industry is developed. On the basis of their forms, the portable terminals may be classified into a bar-type terminal, a flip-type terminal having a flip cover, and a folder-type terminal having a folder part, which is rotatably attached to the main body of the terminal to move within the range of prescribed angles.

Such portable terminals have various functions, such as transmitting/receiving e-mails or data, playing Internet games, or transmitting text messages, in addition to a basic function, i.e., an audio communication function. Still other functions of the portable terminals, such as image communication between users of the portable terminals or a motion picture service, have been increasingly expanded recently as the portable terminals adopt new communication technologies, such as CDMA 1x EVDO. As a mobile communication service area is increased, the portable wireless terminal is further provided with various functional units, such as a camera lens, which becomes especially indispensable as the image communication or the motion picture service using the portable wireless terminal is expanded.

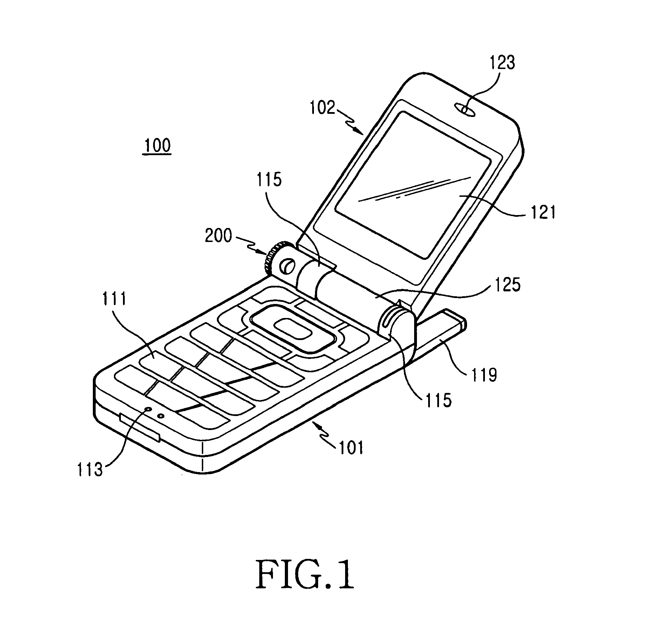

Fig. 1 is a perspective view showing a portable wireless terminal 100 with a conventional camera lens assembly 200. As shown in Fig. 1, the conventional camera lens assembly 200 is mounted in one of side hinged arms 115 of the portable wireless terminal 100. The portable wireless terminal 100 comprises a main body 101 and a folder part 102 rotatably attached to the main body 101.

On the front surface of the main body 101 are arranged a keypad 111 comprising a plurality of key buttons, and a microphone unit 113, which is disposed at one side of the keypad 111. At the upper right end of the main body 101 is attached an antenna unit 119.

The folder part 102 comprises a display unit 121 arranged on the inner surface thereof, which is opposite to the main body 101, and a speaker unit 123 disposed at one side of the display unit 121.

The main body 101 is provided at the upper end thereof with a pair of side hinged arms 115, which are opposite to and spaced apart from each other. At one end of the folder part 102 is formed a center hinged arm 125, which is rotatably disposed between the side hinged arms 115. Consequently, the folder part 102 is rotatably attached to the main body 101. The camera lens assembly 200 is rotatably mounted in one of the side hinged arms 115 of the main body 101.

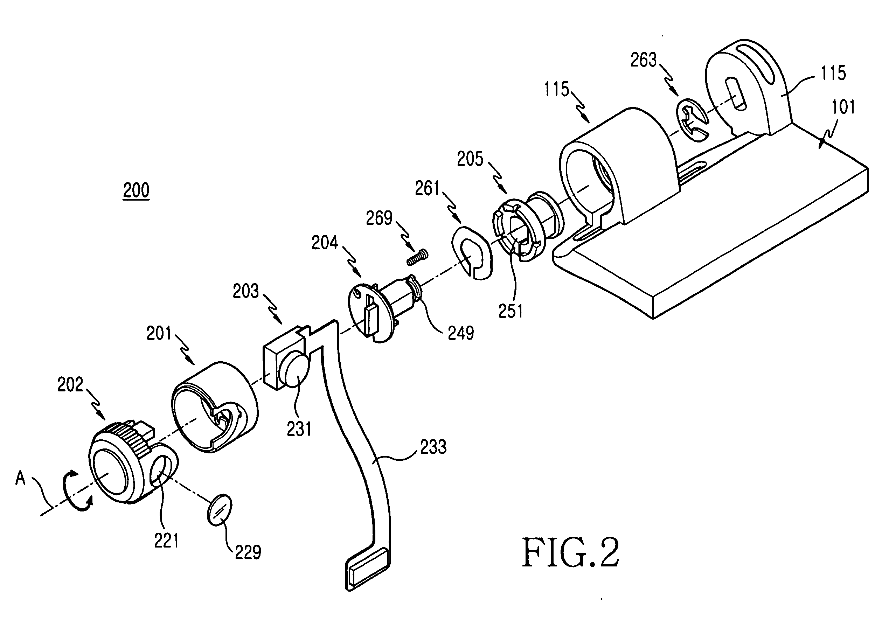

Fig. 2 is an exploded perspective view of the camera lens assembly 200 of the portable wireless terminal 100 shown in Fig. 1. As shown in Fig. 2, the camera lens assembly 200 comprises a lens housing 201, a front cover 202, a lens unit 203, a rear cover 204, and a camera shaft 205. As described above, the camera lens assembly is rotatably mounted in one of the side hinged arms 115 of the main body 101.

The lens housing 201 is formed in the shape of a cylinder having open ends. Inside the lens housing 201 may be mounted ribs (not shown) for supporting a camera lens. The front cover 202 is attached to one end of the lens housing 201. One end of the camera lens 231 is fixed to the inside of the front cover 202. The front cover 202 has an exposure opening 221 for exposing the camera lens 231. The exposure opening 221 is closed by means of a window 229 made of transparent material. The rear cover 204 is fixed to the other end of the lens housing 201 by means of a fixing member, such as a screw 269. From one side of the rear cover 204 is extended a coupling shaft having a grooved coupling part 249 formed at the end thereof. The rear cover 204 serves to close the other end of the lens housing 201. Also, the rear cover 204 provides a passage through which a flexible printed circuit 233 extended from one end of the camera lens 231 passes. The camera shaft 205 has a though-hole 251, though which the coupling shaft of the rear cover 204 is inserted. Consequently, the end of the rear cover 204, where the grooved coupling part 249 is formed, is protruded toward the end of the camera shaft 205. The end of the rear cover 204 is inserted through a diaphragm (not shown) disposed in one of the side hinged arms 115 so that an E-ring 263 is fitted on the grooved coupling part 249 of the rear cover 204. In this way, the camera lens assembly 200 is rotatably mounted in one of the side hinged arms 115.

Between the rear cover 204 and the camera shaft 205 is disposed a spring washer 261, which serves to tightly push the camera shaft 205 to the diaphragm in the side hinged arm 115. Consequently, the camera lens assembly 200 is rotated while the E-ring 263 and the end of the camera shaft 205 are tightly pushed to both sides of the diaphragm, respectively, so that the camera lens assembly 200 is stably rotatable.

The camera lens assembly 200 of the portable terminal 100 with the above-stated construction is rotated about a rotating axis A extended in the lateral direction of the main body 101. As a result, it is possible to take pictures using the camera lens assembly 200 while it is turned toward the front or the rear of the main body 101.

In the conventional camera lens assembly, as known from US-2003/0109232 A1, however, the lens housing can be rotated about only one rotating axis, and picture-taking angles are limited within the rotation track of the lens housing. Consequently, the conventional camera lens assembly has a problem that a picture-taking operation in the lateral direction is difficult and inconvenient although the picture-taking operation in the forward and backward direction is easy.

### SUMMARY OF THE INVENTION

Therefore, the present invention has been made in view of the above problem, and it is an object of the present invention to provide a camera lens assembly for portable wireless terminals comprising lens housings rotatable about two rotating axes, respectively, to provide a picture-taking operation that can be effectively carried out in various directions.

In accordance with one aspect of the present invention, the above and other objects can be accomplished by a camera lens assembly mounted in a portable wireless terminal and comprising: a first lens housing rotatably attached to the terminal so that the first lens housing can be rotated about a first rotating axis extended in one direction; and a second lens housing rotatably attached to one end of the first lens housing so that the second lens housing can be rotated about a second rotating axis extended perpendicularly to the first rotating axis, the second lens housing having a camera lens mounted therein.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a perspective view showing a portable wireless terminal with a conventional camera lens assembly;
Fig. 2 is an exploded perspective view of the camera lens assembly of the portable wireless terminal shown in Fig. 1;
Fig. 3 is an exploded perspective view showing a camera lens assembly for portable wireless terminals according to a preferred embodiment of the present invention;
Fig. 4 is an assembled perspective view of the camera lens assembly shown in Fig. 3;
Fig. 5 is a front view of the camera lens assembly shown in Fig. 4;
Fig. 6 is a side view of the camera lens assembly shown in Fig. 4;
Fig. 7 is another front view of the camera lens assembly shown in Fig. 4;
Fig. 8 is another side view of the camera lens assembly shown in Fig. 4; and
Fig. 9 is a perspective view of a portable wireless terminal with the camera lens assembly shown in Fig. 3 mounted therein.

### DETAILED DESCRIPTION OF THE PREFERRED EMBODIMENTS

Now, a preferred embodiment of the present invention will be described in detail with reference to the accompanying drawings. In the following, a detailed description of known functions and configurations incorporated herein will be omitted, when it may make the subject matter of the present invention rather unclear.

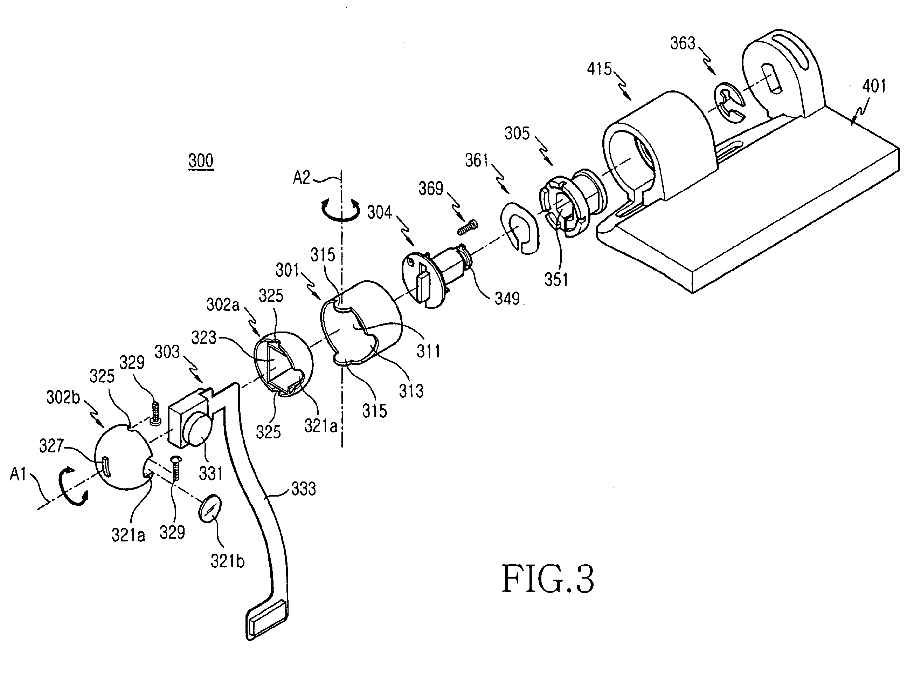

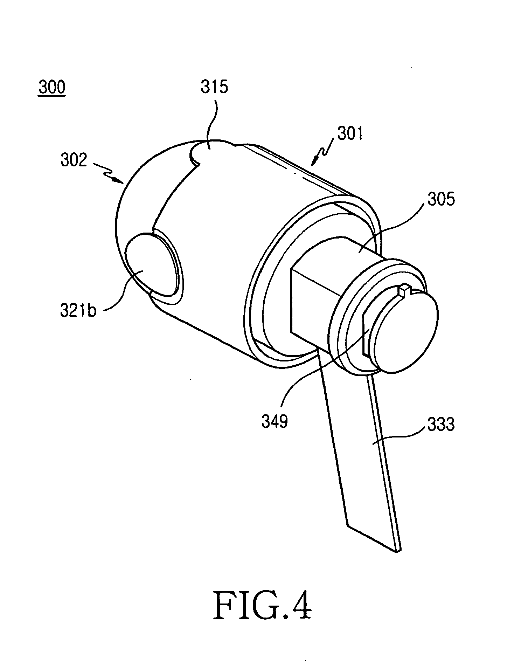

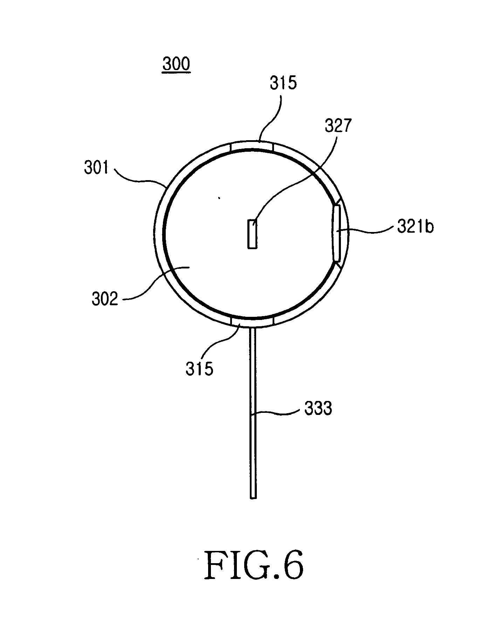

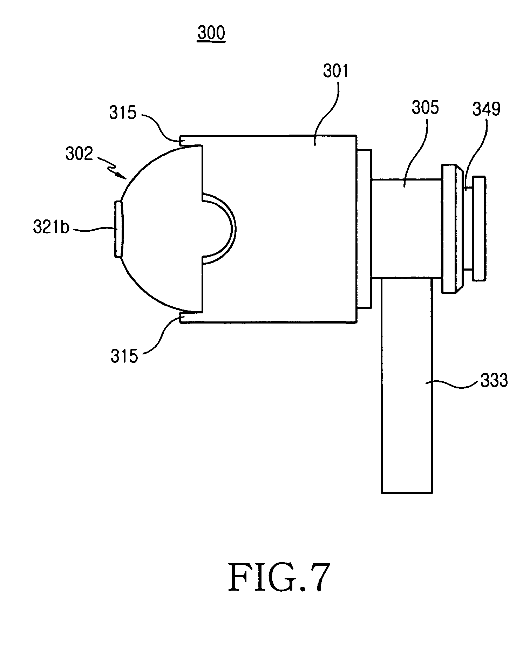

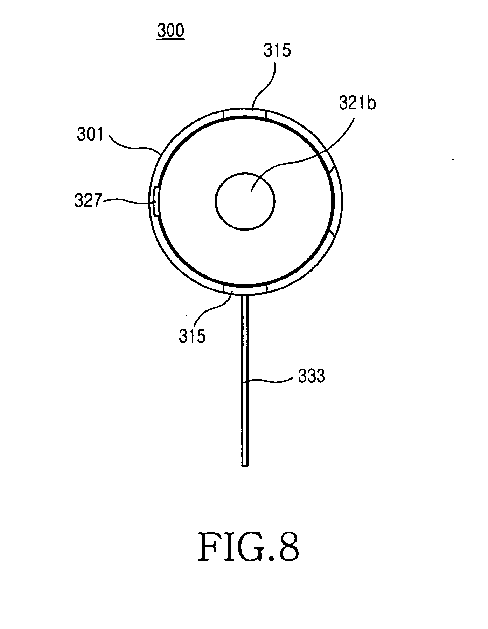

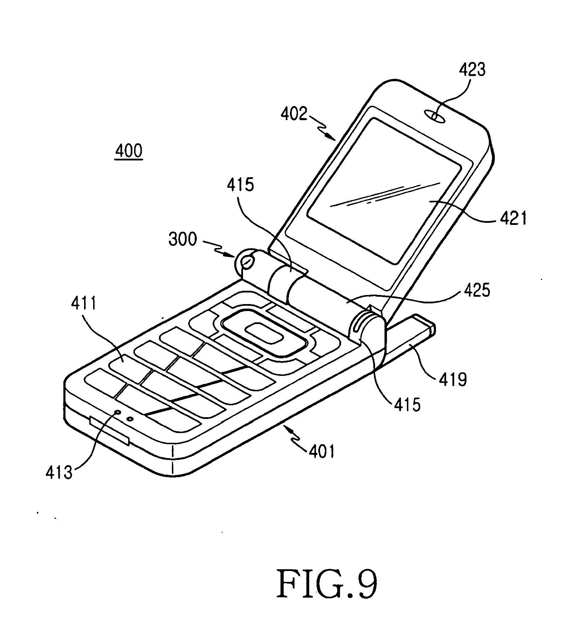

Referring to Figs. 3 to 8, a camera lens assembly 300 for portable wireless terminals, such as a portable wireless terminal 400 shown in Fig. 9, according to a preferred embodiment of the present invention comprises a first lens housing 301, a second lens housing 302, a camera lens unit 303, a rear cover 304, and a camera shaft 305.

The first lens housing 301, shaped as a cylinder, has opposite opened ends defining therebetween a receiving space 311. The first lens housing 301 is provided at one end thereof with a first semicircular opening 313 and a pair of supporting pieces 315. The supporting pieces 315 extend from the end of the first lens housing 301 in the longitudinal direction of the first lens housing 301 and are spaced diametrically apart from one another. The first semicircular opening 313 is spaced angularly from both supporting pieces 315 at a prescribed distance. On the opposite surfaces of the supporting pieces 315 are formed a supporting hole (not shown), respectively. The first lens housing 301 is rotatably mounted in a main body 401 of the portable wireless terminal 400 through the rear cover 304 and the camera shaft 305 so that the first lens housing 301 can be rotated about a first rotating axis A1 extended in the longitudinal direction of the first lens housing 301.

From one side of the rear cover 304 is extended a coupling shaft having a grooved coupling part 349 formed at the end thereof. The rear cover 304 is fixed to the other end of the first lens housing 301 by means of a fixing member, such as a screw 369, for closing the other end of the first lens housing 301. Also, the rear cover 304 provides a passage through which a flexible printed circuit 333, extended from one end of the camera lens 331, passes. The camera shaft 305 has a though-hole 351, though which the coupling shaft of the rear cover 304 is inserted. Consequently, the end of the rear cover 304, where the grooved coupling part 349 is formed, is protruded toward the end of the camera shaft 305. The end of the rear cover 304 is inserted through a diaphragm (not shown) disposed in one of the side hinged arms 415 of the main body 401 so that an E-ring 363 is fitted on the grooved coupling part 349 of the coupling shaft of the rear cover 304. In this way, the camera lens assembly 300 is rotatably mounted in one of the side hinged arms 415.

Between the rear cover 304 and the camera shaft 305 is disposed a spring washer 361, which serves to tightly push the camera shaft 305 to the diaphragm in the side hinged arm 415. Consequently, the camera lens assembly 300 is rotated while the E-ring 363 and the end of the camera shaft 305 are tightly pushed to both sides of the diaphragm, respectively, so that the camera lens assembly 300 is stably rotatable.

The rear cover 304 may be formed integrally with the camera shaft 305. In this case, the spring washer 361 may be disposed adjacent to the grooved coupling part 349 so that the spring washer 361 can be placed against the diaphragm in the side hinged arm 415.

The second lens housing 302 is rotatably attached to one end of the first lens housing 301 so that the second lens housing 302 can be rotated about a second rotating axis A2, which is extended perpendicularly to the first rotating axis A1. The second lens housing 302 comprises a first hemispheric case 302a opposite to the first lens housing 301, and a second hemispheric case 302b attached to the first hemispheric case 302a. Consequently, the first and second hemispheric cases 302a and 302b together constitute the second lens housing 302, which is formed in the shape of a sphere. The first and second hemispheric cases 302a and 302b have a receiving space 323 defined by ribs formed therein. In the receiving space 323 is disposed a camera lens 331 of the camera lens unit 303. The second lens housing, which comprises the first and second hemispheric cases 302a and 302b, is provided at a prescribed position of the outer circumference thereof with a second opening 321a for exposing the camera lens 331. Preferably, the second opening 321a is closed by a window 321b made of a transparent material. As the second lens housing 302 is rotated, the second opening 321 a can be placed above the first semicircular opening 313 of the first lens housing 301. Specifically, the second opening 321b comprises a semicircular opening part formed at the first hemispheric case 302a and another semicircular opening part formed at the second hemispheric case 302b. Also, the second lens housing 302 is provided at the outer circumferential surface thereof with a pair of pinholes 325, which are opposite to each other. As in the second opening 321 a, each pinhole 325 may comprise pinhole parts formed at the first and second hemispheric cases 302a and 302b, respectively. Through the pinholes 325 are inserted supporting pins 329, respectively. The one end of each of the supporting pins 329 is protruded out of the second lens housing 302. Preferably, the supporting pins 329 are rotatably inserted through the corresponding pinholes 325. Alternatively, the supporting pins 329 may be formed integrally at the outer circumferential surface of the second lens housing 302. The supporting pins 329 are rotatably inserted into the supporting holes formed at the supporting pieces 315 of the first lens housing 301, respectively. Consequently, the second lens housing 302 can be rotated about the supporting pins 329 coinciding with the second rotating axis A2.

On the outer circumferential surface of the second lens housing 302 may be formed a protrusion for restricting the rotation range of the second lens housing 302. For example, on the outer circumferential surface of the second hemispheric case 302b is formed a stopper protrusion 327, which is extended along the line connecting two pinholes 325. When the second lens housing 302 is rotated, the stopper protrusion 327 is engaged with the end of the first lens housing 301 for restricting the rotation range of the second lens housing 302. As another example of means for restricting the rotation range of the second lens housing 302, there may be provided a guide rib (not shown) protruded along the edge of the second opening 321a. The guide rib may serve to securely attach the window 321b to the second housing 302 at the second opening 321a. When the second opening 321a is placed above the first semicircular opening 313, the guide rib is engaged with the sidewall of the first semicircular opening 313 for restricting the rotation range of the second lens housing 302.

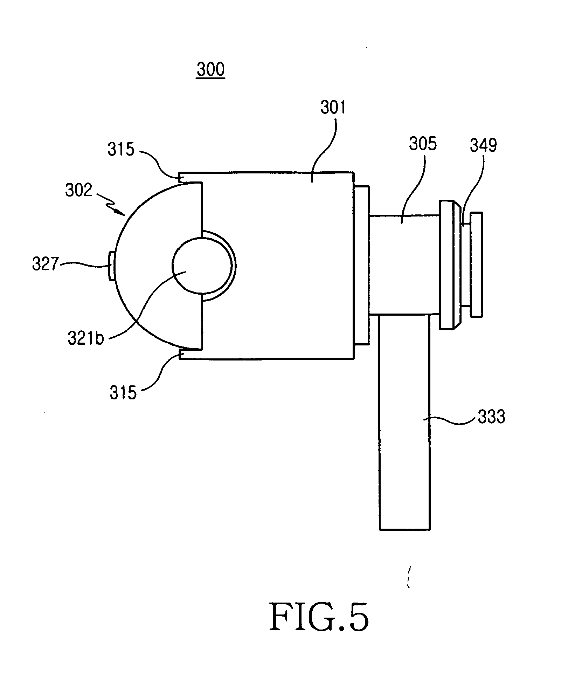

Although it is not shown in the drawings, the first hemispheric case 302a of the second lens housing 302 preferably has a though-hole through which the flexible printed circuit 333 of the camera lens unit 303 passes. The flexible printed circuit 333 passes through the though-hole and the first lens housing 301 and are drawn out from the other end of the first lens housing 301. Since the rotation range of the second leans housing 302 is restricted by means of the stopper protrusion 327, the through-hole formed at the first hemispheric case 302a of the second lens housing 302 is preferably placed in the first lens housing 301. It can be seen from Figs. 5 to 8 that the rotation range of the second lens housing 302 is limited to an angle of 90 degrees by means of the stopper protrusion 327. In other words, when the second lens housing 302 is rotated by an angle of 90 degrees about the second rotating axis A2 under the condition that the second opening 321a is placed above the first opening 313, the stopper protrusion 327 is engaged with the end of the first lens housing 301, by which the second lens housing is no longer rotated. Also, since the guide rib is formed along the edge of the second opening 321 a as described above, the movement of the second opening 321a to the inside of the first lens housing 301 can be restricted.

Fig. 9 is a perspective view showing the portable wireless terminal 400 with the camera lens assembly 300 mounted therein. As shown in Fig. 9, the camera lens assembly 300 is rotatably mounted in the main body 401 of the portable wireless terminal 400. More specifically, the camera lens assembly 300 is mounted in one of the side hinged arms 415 of the main body 401 of the portable wireless terminal 400.

On the front surface of the main body 401 are arranged a keypad 411 comprising a plurality of key buttons, and a microphone unit 413, which is disposed at one side of the keypad 411. At the upper right end of the main body 401 is attached an antenna unit 419. The side hinged arms 415 are formed at the upper end of the main body 401 in a pair, which are opposite to each other while being spaced apart from each other.

A folder part 402 of the portable wireless terminal 400 comprises a display unit 421 arranged on the surface thereof, which is opposite to the main body 401, and a speaker unit 423 disposed at one side of the display unit 421. At one end of the folder part 402 is formed a center hinged arm 425, which is rotatably disposed between the side hinged arms 415.

The camera lens assembly 300 is attached to one end of one of the side hinged arms 415. As the first lens housing 301 is rotated about the first rotating axis A1, the second opening 321a is turned toward the front or the rear of the terminal 400 so that a picture of a subject can be taken in the front or at the rear of the portable wireless terminal 400. As the second lens housing 302 is rotated about the second rotating axis A2, the second opening 321a is turned in the lateral direction of the portable wireless terminal 400 so that a picture of a subject can be taken in the lateral direction of this terminal 400. The second lens housing 302 can be independently rotated irrespective of the rotation of the first lens housing 301. Consequently, it is possible to individually adjust rotation angles of the first and second lens housing 301 and 302, respectively, so that a picture-taking operation can be carried out in the oblique direction as well as the aforesaid forward, backward, and lateral directions.

As apparent from the above description, the present invention provides a camera lens assembly for portable wireless terminals wherein a camera lens can be independently rotated about two rotating axes, whereby a picture-taking operation can be effectively carried out in various directions. Consequently, a picture of a subject can be conveniently taken using the camera lens assembly mounted in the portable wireless terminal.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A camera lens assembly (300) mounted in one of side hinged arms (415) of a main body (401) of a foldable portable wireless terminal (400), comprising:
a first lens housing (301) rotatably attached to the portable wireless terminal (400) so that the first lens housing (301) can be rotated about a first rotating axis (A1) extending in one direction;
**characterized in that**
the camera lens assembly (300) comprises
a second lens housing (302) rotatably attached to the first lens housing (301) so that the second lens housing (302) can be rotated about a second rotating axis (A2) extending perpendicularly to the first rotating axis (A1), the second lens housing (302) having a camera lens (331) mounted therein, wherein the second lens housing (302) further has a through-hole formed at an outer circumference thereof, the through-hole being placed in the first lens housing (301), and wherein the camera lens (331) has a flexible printed circuit (333) extended from one end thereof, the flexible printed circuit (333) passing through the through-hole and the first lens housing (301) and then being drawn out from the other end of the first lens housing (301).

2. The assembly (300) as set forth in claim 1, wherein the first lens housing (301) is a cylinder with an open end for allowing the second lens housing (302) to be attached to the first lens housing (301), and wherein the first lens housing (301) has a first semicircular opening (313), formed on an outer circumference thereof adjacent to the open end, and a pair of supporting pieces (315) spaced diametrically from one another and angularly from the first semicircular opening and extending from the open end along the first rotating axis (A1).

3. The assembly (300) as set forth in claim 2, wherein the second lens housing (302) is sphere-shaped and attached to the open end of the first lens housing (301), wherein the second lens housing (302) has a pair of supporting pins (329) protruding outwardly from an outer circumference of the second lens housing (302) in opposite directions perpendicular to the first rotating axis (A1), so that the supporting pins (329) each are rotatably coupled with a respective one of the supporting pieces (315) of the first lens housing (301), the second lens housing (302) further having a second opening (321a) formed on the outer circumference thereof and spaced from the pair of supporting pins (329) for exposing the camera lens (331).

4. The assembly (300) as set forth in claim 2 or 3, wherein the second opening (321a) is positioned above the first opening (313) as the second lens housing (302) is rotated.

5. The assembly (300) as set forth in claim 1, 2 or 3, wherein the second lens housing (302) further has a stopper protrusion (327) formed on the outer circumference thereof, and wherein the stopper protrusion (327) is engaged with the open end of the first lens housing (301) to restrict a rotation range of the second lens housing (302) relative to the first lens housing (301).

6. The assembly (300) as set forth in claim 5, wherein the rotation range of the second lens housing (302) is limited to an angle of about 90 degrees.

7. The assembly (300) as set forth in any one of claims 1 to 6, further comprising a camera shaft (305) fixed to the first lens housing (301) and spaced from the second lens housing (302) along the first rotating axis (A1), the camera shaft (305) extending along the first rotating axis (A1) so that the camera lens (331) is rotatably attached to the terminal (400).

8. The assembly (300) as set forth in claim 7, wherein the camera shaft (305) has a grooved coupling part (349) formed on an end thereof spaced axially from the second lens housing (302), the grooved coupling part (349) being configured to fittingly receive an E-ring (363).

## Patentansprüche

1. Kameraobjektiv-Anordnung (300), die in einem von seitlichen Scharnierarmen (415) eines Hauptkörpers (401) eines zusammenklappbaren tragbaren Drahtlos-Endgerätes (400) angebracht ist, wobei sie umfasst:
ein erstes Objektivgehäuse (301), das drehbar so an dem tragbaren Drahtlos-Endgerät (400) angebracht ist, dass das erste Objektivgehäuse (301) um eine erste Drehachse (A1) herum gedreht werden kann, die in einer Richtung verläuft;
**dadurch gekennzeichnet, dass**
die Kameraobjektiv-Anordnung (300) umfasst:
ein zweites Objektivgehäuse (302), das drehbar so an dem ersten Objektivgehäuse (301) angebracht ist, dass das zweite Objektivgehäuse (302) um eine zweite Drehachse (A2) herum gedreht werden kann, die senkrecht zu der ersten Drehachse (A1) verläuft, wobei in dem zweiten Objektivgehäuse (302) ein Kameraobjektiv (331) angebracht ist und das zweite Objektivgehäuse (302) des Weiteren ein Durchgangsloch aufweist, das an einem Außenumfang desselben ausgebildet ist, wobei das Durchgangsloch in dem ersten Objektivgehäuse (301) angebracht ist, und wobei das Kameraobjektiv (331) eine flexible gedruckte Schaltung (333) aufweist, die sich von einem Ende desselben aus erstreckt, wobei die flexible gedruckte Schaltung (333) durch das Durchgangsloch sowie das erste Objektivgehäuse (301) hindurch verläuft und dann über das andere Ende des ersten Objektivgehäuses (301) herausgeführt wird.

2. Anordnung (300) nach Anspruch 1, wobei das erste Objektivgehäuse (301) ein Zylinder mit einem offenen Ende ist, das zulässt, dass das zweite Objektivgehäuse (302) an dem ersten Objektivgehäuse (301) angebracht wird, und wobei das erste Objektivgehäuse (301) eine erste halbkreisförmige Öffnung (313), die an einem Außenumfang desselben an das offene Ende angrenzend ausgebildet ist, sowie ein Paar Trageteile (315) aufweist, die diametral voneinander und winklig von der ersten halbkreisförmigen Öffnung beabstandet sind und sich von dem offenen Ende entlang der ersten Drehachse (A1) erstrecken.

3. Anordnung (300) nach Anspruch 2, wobei das zweite Objektivgehäuse (302) kugelförmig ist und an dem offenen Ende des ersten Objektivgehäuses (301) angebracht ist, wobei das zweite Objektivgehäuse (302) ein Paar Tragebolzen (329) hat, die von einem Außenumfang des zweiten Objektivgehäuses (302) in einander entgegengesetzten Richtungen senkrecht zu der ersten Drehachse (A1) so nach außen vorstehen, dass die Tragebolzen (329) jeweils drehbar mit einem entsprechenden der Trageteile (315) des ersten Objektivgehäuses (301) gekoppelt sind, und das zweite Objektivgehäuse (302) des Weiteren eine zweite Öffnung (321 a) hat, die an dem Außenumfang desselben ausgebildet und von den paarigen Tragebolzen (329) beabstandet ist, um das Kameraobjektiv (331) freizulegen.

4. Anordnung (300) nach Anspruch 2 oder 3, wobei die zweite Öffnung (321 a) über der ersten Öffnung (313) positioniert wird, wenn das zweite Objektivgehäuse (302) gedreht wird.

5. Anordnung (300) nach Anspruch 1, 2 oder 3, wobei das zweite Objektivgehäuse (302) des Weiteren einen Anschlagvorsprung (327) hat, der am Außenumfang desselben ausgebildet ist, und wobei der Anschlagvorsprung (327) mit dem offenen Ende des ersten Objektivgehäuses (301) in Eingriff gebracht wird, um einen Drehbereich des zweiten Objektivgehäuses (302) relativ zu dem ersten Objektivgehäuse (301) zu begrenzen.

6. Anordnung (300) nach Anspruch 5, wobei der Drehbereich des zweiten Objektivgehäuses (302) auf einen Winkel von ungefähr 90° begrenzt ist.

7. Anordnung (300) nach einem der Ansprüche 1 bis 6, die des Weiteren eine Kamera-Welle (305) umfasst, die an dem ersten Objektivgehäuse (301) befestigt und von dem zweiten Objektivgehäuse (302) entlang der ersten Drehachse (A1) beabstandet ist, wobei sich die Kamera-Welle (305) entlang der ersten Drehachse (A1) so erstreckt, dass das Kameraobjektiv (331) drehbar an dem Endgerät (400) angebracht ist.

8. Anordnung (300) nach Anspruch 7, wobei die Kamera-Welle (305) einen eingekerbten Verbindungsteil (349) hat, der an einem Ende derselben axial von dem zweiten Objektivgehäuse (302) beabstandet ausgebildet ist, und der eingekerbte Verbindungsteil (349) so konfiguriert ist, dass er einen E-Ring (363) in Passung aufnimmt.

## Revendications

1. Assemblage d'objectif d'appareil de prise de vue (300) monté dans l'un des bras articulés latéraux (415) d'un corps principal (401) d'un terminal sans fil portable pliable (400), comprenant :
un premier boîtier d'objectif (301) attaché de manière rotative au terminal sans fil portable (400) afin que le premier boîtier d'objectif (301) puisse être pivoté autour d'un premier axe de rotation (A1) s'étendant dans une direction ;
**caractérisé en ce que**
l'assemblage d'objectif d'appareil de prise de vue (300) comprend un second boîtier d'objectif (302) attaché de manière rotative au premier boîtier d'objectif (301) afin que le second boîtier d'objectif (302) puisse être pivoté autour d'un second axe de rotation (A2) s'étendant perpendiculairement au premier axe de rotation (A1), le second boîtier d'objectif (302) comportant un objectif d'appareil de prise de vue (331) monté à l'intérieur, dans lequel le second boîtier d'objectif (302) comporte en outre un trou traversant réalisé sur une circonférence externe de ce boîtier, le trou traversant étant positionné dans le premier boîtier d'objectif (301), et dans lequel l'objectif d'appareil de prise de vue (331) comporte un circuit imprimé souple (333) s'étendant depuis l'une de ses extrémités, le circuit imprimé souple (333) traversant le trou traversant et le premier boîtier d'objectif (301) et sortant ensuite par l'autre extrémité du premier boîtier d'objectif (301).

2. Assemblage (300) selon la revendication 1, dans lequel le premier boîtier d'objectif (301) est un cylindre dont une extrémité est ouverte afin de permettre au second boîtier d'objectif (302) d'être monté au premier boîtier d'objectif (301), et dans lequel le premier boîtier d'objectif (301) comporte une première ouverture semi-circulaire (313), réalisée sur une circonférence externe de ce boîtier adjacente à l'extrémité ouverte, et une paire de pièces de support (315) espacées diamétralement l'une de l'autre et angulairement par rapport à la première ouverture semi-circulaire et s'étendant depuis l'extrémité ouverte le long du premier axe de rotation (A1).

3. Assemblage (300) selon la revendication 2, dans lequel le second boîtier d'objectif (302) est de forme sphérique et est relié à l'extrémité ouverte du premier boîtier d'objectif (301), dans lequel le second boîtier d'objectif (302) comporte une paire de broches de support (329) faisant saillie vers l'extérieur à partir d'une circonférence externe du second boîtier d'objectif (302) dans des directions opposées perpendiculaires au premier axe de rotation (A1), afin que les broches de support (329) soient chacune accouplées de manière rotative à l'une des pièces de support respectives (315) du premier boîtier d'objectif (301), le second boîtier d'objectif (302) comportant en outre une seconde ouverture (321a) réalisée sur sa circonférence externe et espacée de la paire de broches de support (329) pour exposer l'objectif d'appareil de prise de vue (331).

4. Assemblage (300) selon la revendication 2 ou 3, dans lequel la seconde ouverture (321a) est positionnée au-dessus de la première ouverture (313) lorsque le second boîtier d'objectif (302) est pivoté.

5. Assemblage (300) selon la revendication 1, 2 ou 3, dans lequel le second boîtier d'objectif (302) comporte en outre une protubérance de butée (327) formée sur sa circonférence externe, et dans lequel la protubérance de butée (327) est engagée avec l'extrémité ouverte du premier boîtier d'objectif (301) pour limiter une plage de rotation du second boîtier d'objectif (302) par rapport au premier boîtier d'objectif (301).

6. Assemblage (300) selon la revendication 5, dans lequel la plage de rotation du second boîtier d'objectif (302) est limitée à un angle d'environ 90 degrés.

7. Assemblage (300) selon l'une quelconque des revendications de 1 à 6, comprenant en outre un axe d'appareil de prise de vue (305) fixé au premier boîtier d'objectif (301) et espacé du second boîtier d'objectif (302) le long du premier axe de rotation (A1), l'axe d'appareil de prise de vue (305) s'étendant le long du premier axe de rotation (A1) de telle sorte que l'objectif d'appareil de prise de vue (331) soit attaché de manière rotative au terminal (400).

8. Assemblage (300) selon la revendication 7, dans lequel l'axe d'appareil de prise de vue (305) comporte une pièce d'accouplement rainurée (349) réalisée sur une de ses extrémités espacée axialement du second boîtier d'objectif (302), la pièce d'accouplement rainurée (349) étant configurée pour recevoir par ajustement un anneau en forme de E (363).
